# EUROPÄISCHE PATENTANMELDUNG

(11) **EP 4 663 366 A2**
(43) Veröffentlichungstag der Anmeldung: **17.12.2025**
(21) Anmeldenummer: 25181288.9
(22) Anmeldetag: 06.06.2025
(51) Int. Cl.: B28B 3/00, B28B 3/02, E01B 19/00, E01C 9/00, E01F 8/00, B28B 1/00, C04B 40/00, C04B 111/52, C04B 38/00, E04C 2/04

(54) **SCHALLABSORBER**

(30) Priorität: 13.06.2024 EP 24182084
(71) Anmelder: Leube Betonteile GmbH & Co KG, 5751 Maishofen (AT)
(72) Erfinder: Laner, Hans, 5733 Bramberg (AT)
(74) Vertreter: Patentanwälte Barger, Piso & Partner

(57) **Zusammenfassung**

Die Erfindung betrifft einen Schallabsorber, umfassend zumindest eine Porenbetonschicht (1) aus faserunterstützten haufwerksporigem Beton, wobei die Porenbetonschicht (1) ein mittleres Porenvolumen von 22% bis 40% aufweist. Weiters betrifft die Erfindung ein Verfahren zur Herstellung eines Schallabsorbers, umfassend die Schritte
i. des Einbringens eines Porenbetons (1) in eine Form (2), wobei
ii. der Porenbeton (1) unter gleichzeitigem Rütteln, für 5 bis 12 Sekunden, bevorzugt bei 150 bis 200 Hz, bis zu einem Verdichtungsfaktor von 1,05 bis 1,45, bevorzugt bis zu einem Verdichtungsfaktor von 1,2-1,33 verpresst wird, wobei das Verpressen gleichmäßig über die gesamte Oberfläche des Porenbetons (1) erfolgt, und
iii. der Schallabsorber ausgehärtet wird.

Im Weiteren wird auch ein Verlegeschema für diesen Schallabsorber beschrieben.

## Beschreibung

Die Erfindung betrifft ein Verfahren zur Herstellung eines Schallabsorbers entsprechend dem Oberbegriff des Anspruches 1. Weiters betrifft die Erfindung einen durch dieses Verfahren hergestellten Schallabsorber und die Verwendung dieses Schallabsorbers zwischen und/oder seitlich von Schienen.

Schallabsorber sind Elemente, die beispielsweise zwischen oder an den Außenseiten von Bahngleisen (nur bei fester Fahrbahn) angebracht werden, um den Lärm, etwa des Schienenverkehrs zu reduzieren und eine Begeh- oder Befahrbarkeit der Gleise in Fahrtrichtung ohne Gleisgeräte zu ermöglichen. Sie werden daher häufig aus Porenbeton hergestellt und auch als Gleisabsorber bezeichnet. Obwohl Gleisabsorber strenggenommen nur die Schallabsorber zwischen den Bahngleisen umfasst, werden die Begriffe im Schienenverkehr häufig synonym verwendet. Eine alternative Variante zur Herstellung von Schallabsorbern ist die Einmischung von Additiven, etwa Holzspänen, in einer Betonmischung. Es handelt sich dabei jedoch um eine andere Technik, die keinen Porenbeton betrifft.

Die poröse Struktur des Schall- bzw. Gleisabsorbers aus Porenbeton absorbiert Schallwellen und bietet so eine effektive und nachhaltige Lösung zur Lärmminderung im Schienenverkehr. Dies führt zu einer deutlichen Reduzierung des Lärmpegels, insbesondere im Bereich der hohen Frequenzen, die als besonders störend empfunden werden. Sie können sowohl bei Neu- als auch bei Sanierungsarbeiten eingesetzt werden, sind witterungsbeständig und haben eine lange Lebensdauer. Schall- bzw. Gleisabsorber sind in verschiedenen Farben und Formen erhältlich und können somit in die Gestaltung der Umgebung eingepasst werden. Die poröse Struktur des Porenbetons entsteht dabei üblicherweise durch Wasserstoffbläschen, die sich bei der Reaktion von Aluminiumpulver mit der alkalischen Mörtelsuspension bilden, welche die allmählich aushärtende Mischung aufschäumen. Eine weitere Möglichkeit ist die Verwendung von haufwerksporigem Beton, bei dem Gesteinskörner dazu führen, dass sich zwischen den Gesteinskörnern Hohlräume ausbilden. Haufwerksporiger Beton wird teilweise für Schallabsorber verwendet, da er in der Regel eine dichtere Struktur hat und daher nicht die gleiche Effizienz bei der Schallabsorption wie Porenbeton bietet.

Bei haufwerkigem Porenbeton, der ein leichtes Baumaterial mit vielen kleinen Luftporen ist, beeinflusst der sogenannte W/B-Wert, auch als Wasser-Bindemittel-Wert bekannt, die Eigenschaften des Endprodukts, wie z.B. die Festigkeit und Dichte. Der W/B-Wert ist entscheidend für die Qualität und die Eigenschaften des Porenbetons und muss sorgfältig gewählt werden, um die gewünschten Materialeigenschaften zu erreichen. Ein hoher W/B-Wert von >0,5 führt zu einem dichteren Gefüge und einer steigenden Druckfestigkeit, jedoch sinkt die Schallabsorption. Ein niedriger W/B-Wert von <0,5 führt zu einem offenen Gefüge und einer offenen Oberfläche, allerdings kann die Festigkeit des Schallabsorbers abnehmen, der Absorber wird brüchig und die Festigkeit sinkt.

Die DE 10 2004 005 912 betrifft einen Schallabsorber aus haufwerksporigem Beton, für dessen Herstellung CEM I WS Zement verwendet wird und dessen Poren einen mittleren Durchmesser von 0,2-4 mm aufweisen und wobei der Beton Mikrokapseln mit einem Polymer als Kapselwand und einem Kapselkern aufweisen. Der Zweck der Erfindung ist ein wärmespeicherndes Material. Die Mischung weist einen W/B-Wert von 0,2 bis 1,4, vorzugsweise 0,5 bis 1,0 auf. Es wird daher versucht eine eher grobporige Betonstruktur mit guten Dämmeigenschaften herzustellen. Diese Wärmedämmeigenschaften werden weiter verbessert durch die verwendeten Polymer-Mikrokapseln. Die fertige Mischung wird in eine Formen eingefüllt und es erfolgt eine Kompaktierung durch starkes Rütteln unter Druck mittels Druckstempel und Rüttelenergie für ca. 15s. Das in der Druckschrift offenbarte Bauteil mag sich gut als Wärmedämmplatte eignen, es ist jedoch aufgrund der grobporigen Struktur und der verwendeten Polymer-Mikrokapseln völlig ungeeignet, um befahren oder begangen zu werden und erlauben auch keine hohen Verdichtungsdrücke. Neben den rein mechanischen Eigenschaften ist diese Offenbarung außerdem nachteilig, da Zement und Wasser mit hoher Geschwindigkeit vermischt werden müssen. Das ist aufgrund der großen Dichteunterschiede erforderlich, um die Polymer-Mikrokapseln gleichmäßig in der Mischung zu verteilen. Diese hohen Mischgeschwindigkeiten können zu einer Erhöhung der Temperatur des Betons führen, was zu einer erhöhten Wasserverdunstung und einer Störung des Produktionsprozesses führt, was sich in weiterer Folge wiederum negativ auf die Festigkeitseigenschaften des Materials auswirkt. Zu guter letzt ist der für die Herstellung verwendete CEM I WS Zement aufgrund seiner hohen CO² Emissionen nicht mehr frei am Markt verfügbar.

Die DE 10 2004 027 928 und die EP 1 605 101 betreffen eine Wandplatte aus Beton, mit einer Vorsatzschale aus Porenbeton "oder dergleichen" für Lärmschutzwände. Die Schicht aus Porenbeton besteht z.B. aus Blähschiefer, Holzbeton, Schaumglas oder Blähton-Beton. Dieser Porenbeton wird in eine Form eingebracht, in der zuvor ein tragender Beton eingebracht wurde. Nach dem Befüllen einer Form mit Porenbeton wird dieser mittels eines Rüttelstampfers, der durch die Muskelkraft einer Person, durch Heben und Senken des Gerätes, über die zu verdichtende Fläche geführt wird, verdichtet und anschließend in einem mehrstufigen Verfahren mit einer Stampfvorrichtung rillenförmig (etwas Anderes ist nicht offenbart) durch eine Strukturmatrize profiliert. Nachteilig daran ist, dass sich die offenbarten Betonarten nicht oder nicht dauerhaft befahren lassen. Auch der Umstand, dass ein rillenförmiges Muster aufgeprägt wird, zeigt, dass die offenbarten Lärmschutzwände nicht für eine Befahrbarkeit ausgelegt sind und sich daher nicht für den Einsatz als Gleisabsorber eignen.

Die EP 2 543 649 offenbart einen ultrahochfesten Beton (UHPC), der aus Wasser, Zement, super-reaktiven Materialien, latent-hydraulischen Materialien und inerten Füllstoffen besteht und eine erdfeuchte Konsistenz aufweist. Der UHPC zeichnet sich durch eine Packungsdichte von 0,72 bis 0,85 und eine Wasserfilmdichte von 60nm bis 100nm um jedes Korn aus, was zu einer hohen Festigkeit und Haltbarkeit führt. Die Erfindung umfasst auch die Verwendung dieses Betons in monolithischen Formsteinen und Formsteinen, die aus mindestens zwei Komponenten bestehen, um Konstruktionen im Bauwesen zu ermöglichen. Die Patentanmeldung erwähnt keine spezifischen Anwendungen für Lärmschutzanwendungen. Der Fokus liegt auf der allgemeinen Verbesserung der Eigenschaften von Beton, wie Druckfestigkeit, Dauerhaftigkeit und der Möglichkeit, filigrane und hochtragfähige Bauteile herzustellen. Der UHPC weist eine extrem hohe Gefügedichte auf, die so gut wie keine Poren und Mikrorisse enthält. Diese Eigenschaft führt zu einer drastischen Reduzierung des Kapillarporenanteils im Vergleich zu konventionellem Beton. Dadurch wird der UHPC praktisch dicht gegen Flüssigkeiten und weist keine Porosität mehr auf. Beide Eigenschaften sind sehr nachteilig für Lärmschutzwände im Allgemeinen und Gleisabsorber im speziellen, da die Poren nicht nur für die Schalldissipation wichtigen sind, sondern darüber hinaus ein zumindest teilweises Versickern des Regenwassers erlauben. Ein völliges Fehlen dieser Eigenschaft verstärkt die Bodenversiegelung und ist daher für den Anwendungsfall als Gleisabsorber ungeeignet. Ein weiterer großer Nachteil liegt hier darin, dass spezielle Rohstoffe benötigt werden, die schwer zugänglich und teuer sind und mit speziellen Hochleistungsmischern und präzisen Dosiergeräten vermischt werden müssen.

Die AT407062 beschreibt eine Lärmschutzeinrichtung für Gleisanlagen mit Schwellen, die trogförmige Vertiefungen aufweisen. Die Einrichtung besteht aus üblichen Schallabsorbern, wobei Gleisabsorber in die Vertiefungen eingesetzt werden und Randabsorbern zwischen die Schwellen und die Schienen gelegt werden. Die Randabsorber erstrecken sich vom Schwellenende bis in den Trogbereich und tragen die Gleisabsorber. Dadurch wird der Montageaufwand reduziert und die Lärmschutzeigenschaften der Lärmschutzeinrichtung werden verbessert.

Die WO2013075159 offenbart verschiedene Geometrien, Absorbermaterialien, Befestigung, Radiusausbildung und Möglichkeiten der Verbindung eines Gleisabsorbers mit der Schiene.

Es besteht daher Bedarf an einer Weiterentwicklung von Schallabsorbern, die noch bessere schallabsorbierende Eigenschaften und zugleich eine bessere Haltbarkeit erzielen können, befahren werden können und dennoch eine gewisse Durchlässigkeit für Regenwasser aufweisen sowie wirtschaftlich herstellbar sind.

Erfindungsgemäß geschieht dies durch einen Schallabsorber aus faserunterstütztem haufwerksporigem Beton sowie ein Verfahren zur Herstellung dieses faserunterstützten Schallabsorbers. Mit anderen Worten wird ein Schallabsorber aus faserunterstütztem haufwerksporigem Beton hergestellt, indem haufwerksporiger Beton in eine Form eingebracht wird, dieser haufwerksporige Beton anschließend unter gleichzeitigem Rütteln der Form unter gleichmäßiger Druckbelastung verpresst wird und schließlich der Schallabsorber aushärten gelassen wird, wodurch sich ein besonders stabiler, gut befahrbarer und feinporiger Schallabsorber ergibt, der sich gut für die Verwendung als Gleisabsorber eignet.

Da Schallabsorber aus Porenbeton oder haufwerksporigem Beton hergestellt werden, wird eine Porengröße gewünscht, die auf die Bauteildicke abgestimmt werden muss. Der erfindungsgemäße Schallabsorber und das für deren Herstellung verwendete gegenständliche Verfahren, verwendet statt klassischem Porenbeton, faserunterstützten aufwerksporigen Beton. Um die Porengröße derart fein einstellen zu können, muss das Gesteinsmaterial und seine Korngrößen auf den Anwendungszweck abgestimmt werden. Die Eigenschaften des Schallabsorbers lassen sich damit nur in einem begrenzten Umfang beeinflussen, um eine möglichst optimale Dissipation und Absorption der Schallwellen zu erreichen. Beim erfindungsgemäßen Schallabsorber liegt eine Packungsdichte von bevorzugt 0,5 - 0,8 und besonders bevorzugt von 0,64-0,74 gemäß DIN 4213 vor. Eine hohe Packungsdichte von 0,64-0,74 bedeutet dabei, dass die verschiedenen Komponenten wie Zement, Füllstoffe und Gesteinskörnungen so angeordnet sind, dass sie den verfügbaren Raum optimal ausfüllen. Dies führt zu einer Reduzierung von Hohlräumen und Poren im Material, was wiederum die Festigkeit und Dauerhaftigkeit des Betons erhöht. Eine hohe Packungsdichte trägt dazu bei, dass der Beton weniger anfällig für das Eindringen von Flüssigkeiten, Gasen und Chemikalien ist, was seine Widerstandsfähigkeit in verschiedenen Umgebungen verbessert. Es wird daher im Stand der Technik üblicherweise eine höhere Packungsdichte für befahrene Betonteile angestrebt als in der gegenständlichen Erfindung.

Bei unterschiedlichen Vergleichsversuchen von Fertigungsverfahren wurde nun überraschend festgestellt, dass Schallabsorber, bei denen der haufwerksporige Beton unter gleichzeitigem Rütteln verpresst wird, besonders vorteilhafte schallabsorbierende Eigenschaften aufweist. Es ist für die Erfinder nicht völlig klar, wie diese Eigenschaften zustande kommen, denkbar wären etwa veränderte Porengeometrien durch den Pressvorgang, die sich in besseren schalldämmenden und schallabsorbierenden Eigenschaften widerspiegeln. Dies erscheint plausibel, da sich das Porengefüge durch das Verpressen besser steuern lies als durch die Betonrezeptur alleine. Die schalldämmenden und schallabsorbierenden Eigenschaften waren jedenfalls signifikant besser. Auch wenn nach dem erfindungsgemäßen Verfahren hergestellte Schallabsorber haufwerksporigen Beton und keinen klassischen Porenbeton (bei Gas die Porenstruktur bildet) aufweisen, so wird dennoch im Weiteren zur besseren Lesbarkeit der Anmeldung allgemein von "Porenbeton" gesprochen. Der Begriff "Porenbeton" ist daher im Zusammenhang der weiteren Beschreibung als Synonym mit haufwerksporigem Beton anzusehen.

Das Herstellungsverfahren wird nun anhand der Figuren näher erläutert. Dabei zeigt
Fig. 1 das Einbringen von Porenbeton in eine Form,
Fig. 2 das Verpressen des Porenbetons,
Fig. 3 das Anbringen von Bewehrungen in der Form,
Fig. 4 das Auftragen von Tagbetons auf den Porenbeton,
Fig. 5 ein Schnittbild durch das fertige Bauteil in der Form.

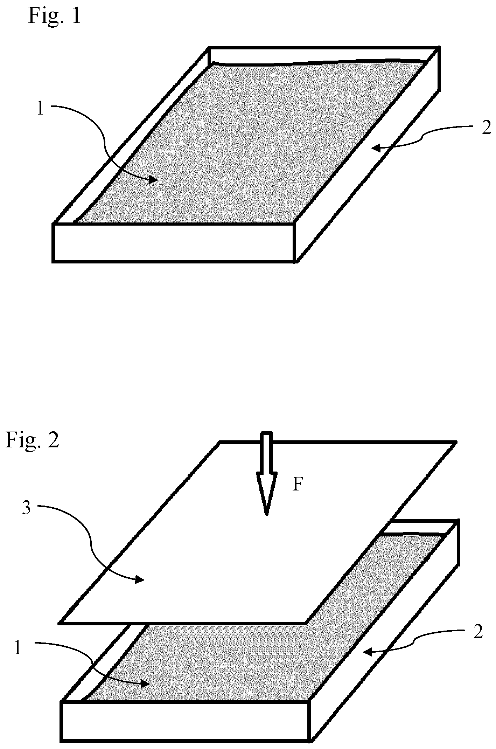

Im ersten Schritt des Herstellungsverfahrens wird, wie für die Herstellung von Schallabsorbern üblich und in Fig. 1 gezeigt, Porenbeton 1 in eine Form 2 eingebracht. Die Einbringung sollte recht gleichmäßig erfolgen und lässt sich aufgrund des höheren Materialdurchsatzes üblicherweise am besten mit Hilfe eines Förderbands (nicht dargestellt) durchführen.

Im zweiten Schritt wird der Porenbeton 1 üblicherweise möglichst gleichmäßig in der Form 2 verteilt, um homogene Eigenschaften bei der Schalldissipation zu erreichen. Dies geschieht üblicherweise durch Abziehen. Theoretisch ist es jedoch auch möglich durch gezielte Steuerung von Inhomogenität die Dissipationseigenschaften der Schallabsorber zu steuern.

Im dritten Schritt wird der Porenbeton 1 in der Form 2 verpresst, wie in Fig. 2 dargestellt. Üblicherweise geschieht dies mit Hilfe einer Gewichtsplatte 3. Während des Verpressens wird die Form 2 mit dem enthaltenen Porenbeton 1 und unter Druck durch die Gewichtsplatte 3 gerüttelt. Es wurden Gewichtsplatten 3 mit unterschiedlichem Anpressdruck F (dargestellt durch den Pfeil in Fig. 2) getestet, dabei hat sich gezeigt, dass das Verpressen mit einem Druck von zumindest 1500 kg/m², bevorzugt mit einem Druck von zumindest 1700 kg/m² erfolgen sollte. Dieser Schritt ist wesentlich für die späteren akustischen Eigenschaften. Dabei wird der Begriff "Gewichtsplatte" synonym mit allen Pressvorrichtungen verwendet, die ähnliche physikalische Eigenschaften aufweisen, insbesondere hydraulische und mechanische Pressen. Wichtig ist hierbei aber, dass der Druck gleichmäßig über die gesamte Oberfläche des Porenbetons 1 erfolgt, um eine gleichmäßige Verpressung und eine einheitliche Porenstruktur zu erreichen. Die Rüttelung erfolgt für 5 bis 12 Sekunden, bevorzugt bei 150 bis 200 Hz. Der Porenbeton 1 wird dadurch unter gleichzeitigem Rütteln bis zu einem Verdichtungsfaktor von 1,05 bis 1,45, bevorzugt bis zu einem Verdichtungsfaktor von 1,2-1,33 verpresst, wobei das Verpressen gleichmäßig über die gesamte Oberfläche des Porenbetons 1 erfolgt. Der Verdichtungsfaktor ist hier durch das Volumen des frischen Betons vor dem Verdichten im Verhältnis zum Volumen des späteren, verdichteten Betons definiert. Um sicherzustellen, dass der Beton nach dem Verdichten wirklich die gewünschten Eigenschaften erreicht, wird dazu absichtlich mehr Betonvolumen in die Form eingefüllt, als der fertige Absorber später haben soll. Ein spezieller Aufsatz an der Schalung dient dabei dazu, diese Überfüllung zu ermöglichen. Es ist quasi ein temporärer "Rand" auf der Schalung, der es erlaubt, den Beton höher als die eigentliche Endhöhe der Struktur einzufüllen. Nachdem dieser zu hohe Beton eingefüllt wurde, wird er verdichtet. Während dieses Vorgangs sinkt das Volumen des Betons. Der Verdichtungsfaktor im Bereich von 1,05 bis 1,45 beschreibt in diesem Kontext also das Verhältnis des Volumens des eingebrachten Frischbetons zum angestrebten Volumen des finalen Bauteils. Ein Faktor von 1,05 besagt, dass 1,05-mal das Volumen des fertigen Betonbauteils an Frischbeton eingefüllt wird, was einer geringfügigen Überfüllung entspricht. Hingegen bedeutet ein Faktor von 1,45, dass das 1,45-fache Volumen des Frischbetons vorzusehen ist. Dies bedeutet eine signifikante Überfüllung, die eine intensivere Verdichtung des Materials erforderlich macht.

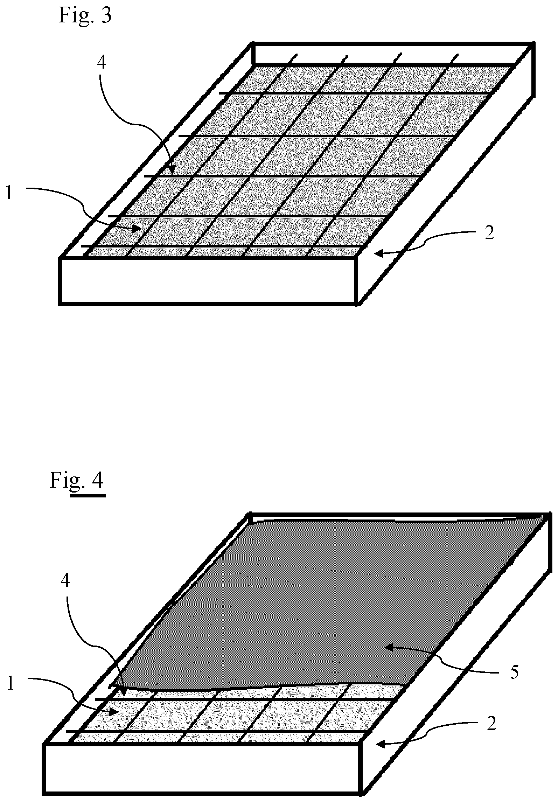

In einem vierten Schritt können, wie in Fig. 3 zu sehen ist, Bewehrungen 4, etwa in der Form von Querstreben, in der Gussform 2 eingebaut werden. Diese Bewehrungen 4 bestehen üblicherweise aus Bewehrungsstahl bzw. Betonstahlmatten und sind der Fachperson bekannt. Sie sind besonders vorteilhaft, wenn das Bauteil (der Schallabsorber) später befahren wird (etwa an Bahnübergängen).

Im fünften Schritt kann ein Ausgleichs- bzw. Tragbeton 5 auf den Porenbeton 1 aufgebracht werden. Dies ist schemenhaft in Fig. 4 dargestellt, wobei zur besseren Verdeutlichung in der Fig. 4 ein Zeitpunkt während des Aufbringens des Tragbetons 5 dargestellt ist, der Tragbeton 5 also noch nicht alle Bewehrungen 4 bedeckt. Wurden im vierten Schritt Bewehrungen 4 angebracht, so wird der Tragbeton 5 auf der Seite des Porenbetons 1 in die Form 2 eingebracht, auf der sich die Bewehrungen 4 befinden, und sichergestellt, dass der Tragbeton 5 die Bewehrungen 4 einschließt. Das Aufbringen des Ausgleichs- bzw. Tragbeton 5 auf den Porenbeton 1 muss Nass in Nass (also in nassem Zustand des Porenbetons) erfolgen.

Üblicherweise bedeutet das, dass sich ein Aufbringen des Trägerbetons 5 binnen 30 Minuten nach Einbringen des Porenbetons 1 als vorteilhaft erwiesen hat.

Wurde in Schritt Fünf Tragbeton 5 auf den Porenbeton 1 aufgebracht, so wird in einem sechsten Schritt der Ausgleichs- bzw. Tragbeton 5 üblicherweise gleichmäßig in der Form 2 verteilt. Dies geschieht wieder, um eine möglichst gleichmäßige Materialverteilung sicher zu stellen.

Wurde in Schritt Fünf Tragbeton 5 auf den Porenbeton 1 aufgebracht, so muss in Schritt sieben das gesamte Bauteil samt Form 2 gerüttelt werden. Auf diese Weise wird vor allem sichergestellt, dass es zu einer guten Verbindung von Porenbeton 1 und Tragbeton 5 kommt.

Wurde in Schritt Fünf Tragbeton 5 auf den Porenbeton 1 aufgebracht, so wird in einem achten Schritt der Tragbeton 5 üblicherweise abgezogen. Auf diese Weise erhält das Bauteil eine gleichmäßige Oberfläche, was sowohl für Weiterverarbeitung als auch Transport vorteilhaft ist und eine zusätzliche Steuerung der Bauteildicke ermöglicht.

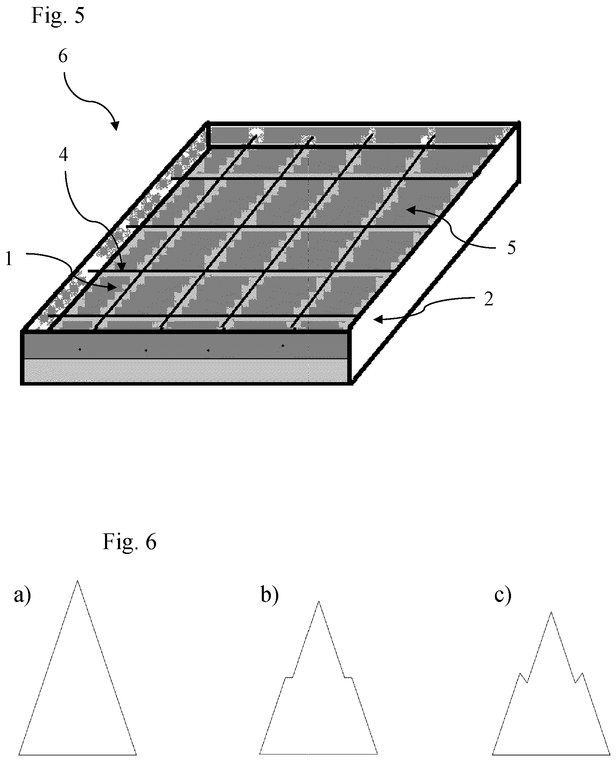

Im neunten Schritt wird das fertige Betonbauteil 6 (der Schallabsorber) aushärten gelassen. Üblicherweise geschieht das in einer Reifekammer, da auf diese Weise die Parameter der Aushärtung möglichst ideal reguliert werden können. Fig. 5 zeigt beispielhaft ein fertiges Bauteil 6 vor dem Aushärten in einer Schnittansicht. Dabei wurde der Tragbeton 5 schematisch als transparent dargestellt, um die eingeschlossenen Bewehrungen 4 und den darunterliegenden Porenbeton 1 sehen zu können. Bei einem realen Bauteil ist der Tragbeton 5 selbstverständlich deckend, wie auch im oberen Bereich der Fig. 4 angedeutet. Zwar ist das Aushärten in einer Reifekammer der optimale Fall, da sich dadurch die Parameter des Endprodukts besser einstellen lassen, es ist jedoch kein zwingendes Erfordernis.

Wie oben auch beschrieben sind die Schritte 2, 4, 5, 6, 7 und 8 grundsätzlich optional. Sollte einer dieser optionalen Schritte durchgeführt werden, so bedeutet das auch nicht zwangsweise, dass alle Schritte durchgeführt werden müssen, eine Ausnahme stellt Schritt Sieben dar, der bei Durchführung von Schritt Fünf erforderlich ist. So wäre beispielsweise ein Verfahren möglich, dass nur die Schritte 1, 3, 5, 7 und 9, oder 1, 2, 3, 5, 7 und 9, oder 1, 3, 4, 5, 7 und 9, oder 1, 3, 5, 6, 7 und 9, oder 1, 3, 5, 7, 8 und 9, oder 1, 2, 3, 5, 6, 7 und 9, usw. umfasst. Die Ausführung aller Schritte 1-9 stellt jedoch ein besonders bevorzugtes Verfahren zur Herstellung eines Schallabsorbers dar. Die Materialeigenschaften des Betons lassen sich nach EN 12390 testen. Das fertige Bauteil weist in der Porenbetonschicht 1 ein mittleres Porenvolumen von 22% bis 40%, bevorzugt von 28% bis 30% und besonders bevorzugt ein mittleres Porenvolumen von 28,6% bis 29,5% auf. Das Porenvolumen wurde dabei mittels des archimedischen Prinzips (Flüssigkeitsverdrängung) als Dichtemessung nach EN 12390-7 bestimmt. Es werden also nicht einzelne Porenvolumina bestimmt, sondern das arithmetische Mittel der gesamten Porenvolumina.

Weiters weist die Porenbetonschicht 1 eine Druckfestigkeit von mindestens 8 N/mm² und durchschnittlich zumindest 14 N/mm², bevorzugt von mindestens 11 N/mm² und durchschnittlich zumindest 15 N/mm², bestimmt nach EN 12390 auf. Die Messungen erfolgen projektabhängig. Ein typischer Fall wäre 1 x pro Woche gemäß EN 206. Sollte eine Trägerbetonschicht 5 zur Anwendung kommen, so weist die Trägerbetonschicht 5 eine Druckfestigkeit von zumindest 30 N/mm², bevorzugt von zumindest 40 N/mm², bestimmt nach EN 12390, auf.

Für die Betonausgangsstoffe Zement, Gesteinskörnungen (Zuschläge), Wasser, Zusatzmittel und Zusatzstoffe wird auf die einschlägigen europäischen Normen (z.B. EN 197 für Zement, EN 12620 für Gesteinskörnungen) verwiesen.

Darüber hinaus sind selbstverständlich übliche Behandlungen von Betonbauteilen, wie etwa das Einfärben und andere Oberflächenbehandlungen möglich. Derartige Oberflächenbehandlungen können dazu verwendet werden besonders bevorzugte Oberflächeneigenschaften zu erzielen, oder der Schallabsorbern zusätzliche vorteilhafte Eigenschaften zu verleihen. Der Fachperson sind Verfahren zur Oberflächenbehandlung von Schallabsorbern bekannt. Weiters kann das Bauteil mit oder ohne konusförmiger Lochstruktur ausgeführt werden. Eine Anpassung der Form, Ausbildung und Anordnung der Konen ist möglich und kann projektbezogen festgelegt werden.

Konische Lochstrukturen, auch bekannt als konische Perforationen, können die Schallabsorptionsleistung von Schallabsorbern in mehrfacher Hinsicht verbessern. Ein Schallabsorber, der diese konischen Lochstrukturen aufweist, stellt daher eine besonders bevorzugte Ausführungsform dar. Um diesen herzustellen, weist die Form 2 konische Elemente auf. In Fig. 1 wären diese vom Porenbeton 1 umschlossen. Diese konischen Strukturen können unterschiedliche Formen und Längen aufweisen und können entweder fester Bestandteil der Form 2 sein, oder separate Elemente darstellen, die in die Form gestellt werden können. Üblicherweise erstrecken sich die konischen Strukturen nur zu einem Teil in die Porenbetonschicht 1. Es ist jedoch auch möglich Schallabsorber 6 zu produzieren, bei denen die konischen Strukturen so ausgebildet sind, dass sie sowohl die Porenbetonschicht 1 als auch die optionale Trägerbetonschicht 5 durchdringen. Diese Ausgestaltung kann vorteilhaft sein, wenn Gleisabsorber produziert werden sollen, bei denen die bereits guten Versickerungseigenschaften von Regenwasser verbessert werden sollen. Fig. 6 zeigt beispielhafte, nicht abschließende, Darstellungen möglicher Querschnitte von zur Verwendung im erfindungsgemäßen Verfahren geeigneter konischen Strukturen. Wichtig ist bei dieser bevorzugten Ausführungsform, dass die konischen Lochstruktur mehr oder weniger eine Kreisform aufweisen, im Gegensatz zu den aus dem Stand der Technik bekannten Rippen- und Wellenstrukturen. Besonders bevorzugt reichen die konischen Strukturen zumindest durch ein Drittel der Porenbetonschicht 1.

Die konischen Strukturen bewirken verschiedene akustische Effekte, die zur Absorption von Schallwellen beitragen, insbesondere im mittleren und hohen Frequenzbereich. So können konische Löcher das Absorptionsspektrum eines akustischen Absorbers verbreitern. Die konische Form bewirkt eine Variation des Lochdurchmessers, wodurch der Frequenzbereich, in dem der Absorber Schall effektiv absorbieren kann, erweitert wird. Weiters bewirkt die konische Form eine Verbesserung der diffusen Streuung, d. h. die Wellen werden im Absorbermaterial in verschiedene Richtungen reflektiert und umgelenkt. Diese Streuung unterbricht die kohärente Ausbreitung der Schallwellen und führt zu einer erhöhten Energieabsorption. Konische Löcher können darüber hinaus dazu beitragen, die Impedanz des Absorbermaterials an die Impedanz der Luft anzupassen, was für eine effiziente Schallabsorption entscheidend ist. Die konische Form schafft einen allmählichen Übergang im Lochdurchmesser, wodurch Impedanzfehlanpassungen minimiert und die Absorption maximiert werden. Allgemein können konische Lochstrukturen die Schallabsorptionsleistung von akustischen Absorbern erheblich verbessern, insbesondere im mittleren und hohen Frequenzbereich. Ihre Fähigkeit, das Absorptionsspektrum zu erweitern, die diffuse Streuung zu verstärken, die Impedanzanpassung zu verbessern, die Oberflächenreflexion zu verringern und die Luftströmung zu steuern, macht sie zu wertvollen Designelementen.

Grundsätzlich lassen sich unterschiedlichste Arten von Porenbeton 1 und Trägerbeton 5 für die Herstellung eines Schallabsorbers gemäß dem erfindungsgemäßen Verfahren verwenden. Wichtig ist jedoch, dass es sich beim Porenbeton 1 um haufwerkigen Porenbeton mit einem W/B-Wert, auch als Wasser-Bindemittel-Wert bekannt, zwischen 0,23 und 0,31 handelt. Der W/B-Wert gibt das Verhältnis von Wasser zu Bindemitteln (wie Zement, Kalk oder anderen hydraulisch wirksamen Zusatzstoffen) in einer Betonmischung an. Die Hohlräume entstehen durch die Verwendung bestimmter Fraktionen von Schotter. Das Verpressen und Rütteln ermöglicht die Bildung von Poren/Hohlräumen, die sich in internen Tests aus schallabsorptionstechnischer Sicht als am effektivsten gezeigt haben.

Weitere Tests wurden durchgeführt, bei denen unabhängig voneinander der Porenbetonmischung 1 und der Trägerbetonmischung 2 Fasern zugesetzt wurden. Diese führten zu einer Erhöhung der Festigkeit sowie des Frost- und Tausalzwiederstands und verhindern bei mechanischen Schäden das Ablösen von einzelnen Gesteinskörnern. Die Zugabe von Fasern stellte sich in weiteren Versuchen als essenziell heraus, um die sichere und dauerhafte Befahrbarkeit des fertigen Schallabsorbers sicher zu stellen.

Es hat sich darüber hinaus gezeigt, dass die zusätzliche Trägerbetonschicht 5 die Porenbetonschicht 1 bis zum Zeitpunkt der Ausschalung vor dem Austrocknen schützt und dadurch nicht nur zu einer Verbesserung der Stabilität des Endprodukts führt, sondern auch eine bessere Hydratation der Porenbetonschicht 1 ermöglicht, was zu einem langsameren und gleichmäßigeren Aushärten führt und darüber hinaus die Produktionsgenauigkeit in Bezug auf die Elementstärke gesteigert werden kann. In bevorzugten Ausführungsformen weist die Tragbetonschicht 5 eine um etwa 30% höhere Dichte als die Porenbetonschicht 1 auf.

Besonders gute Ergebnisse wurden mit Porenbeton 1 erzielt, der eine Dichte von etwa 1850 kg/m³ aufweist und/oder mit Trägerbeton 5, der eine Dichte von etwa 2400 kg/m³ aufweist. Dies ergibt sowohl gute akustische als auch Festigkeitseigenschaften.

Weiters hat es sich als vorteilhaft herausgestellt, wenn das Verhältnis der Dicke der Tragbetonschicht 5 zur Porenbetonschicht 1 zumindest 1: 1 beträgt, besonders bevorzugt ist die Porenbetonschicht 1 dicker als die Trägerbetonschicht 5. Auch hier ergaben Versuche sowohl gute akustische als auch Festigkeitseigenschaften.

Nach dem erfindungsgemäßen Verfahren hergestellte Schallabsorber lassen sich problemlos in unterschiedlichen Größen produzieren. Übliche Breiten und Längen reichen von wenigen Zentimetern bis zu einigen Metern. Übliche Dicken reichen von wenigen Zentimetern bis etwa 40cm. Grundsätzlich ist es auch möglich besonders kleine oder große Schallabsorber herzustellen, diese verursachen jedoch bei Einbau und Austauschbarkeit Probleme und stellen daher häufig sowohl die Produktionsfirmen, als auch die Transportdienstleister, die die fertigen Schallabsorber transportieren müssen, vor große Herausforderungen, weshalb üblicherweise von zu dicken, zu dünnen und zu großen Platten Abstand genommen wird.

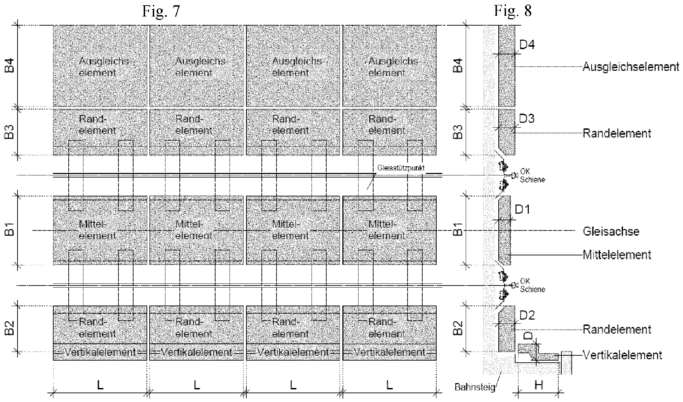

Die fertigen Schallabsorber können beispielsweise als Gleisabsorber verwendet werden. Dabei werden die Schallabsorber in einem bestimmten Verlegeschema im Gleisbett von Schienenfahrzeugen verlegt, um eine möglichst effiziente Schallabsorption vor Ort sicher zu stellen. Ein Verlegeschema, das sich für die erfindungsgemäßen Schallabsorber bewährt hat ist in Fig. 7 und Fig. 8 dargestellt. Dabei zeigt

Fig. 7 ein Verlegeschema von verlegten Gleisabsorbern aus der Vogelperspektive,

Fig. 8 ein Verlegeschema von verlegten Gleisabsorbern aus der Seitenansicht.

Die Fig. 7 zeigt ein Verlegeschema von verlegten Gleisabsorbern aus der Vogelperspektive, das eine besonders gute Schallabsorbtion erreicht. Dabei sind B1, B2, B3 und B4 die Breiten der Mittel-, Rand- und Ausgleichselemente. Die Breiten können jeweils zwischen 150 mm und 1500 mm liegen. L bezeichnet die Länge der Elemente, die zwischen 300 mm und 2000 mm liegen können. Üblicherweise weisen Mittel-, Rand-, Vertikal- und Ausgleichselemente die gleichen Längen auf.

Die Fig. 8 zeigt ein Verlegeschema von verlegten Gleisabsorbern aus der Seitenansicht, das eine besonders gute Schallabsorbtion erreicht. Dabei sind B1, B2, B3 und B4 die Breiten der Mittel-, Rand- und Ausgleichselemente. Die Breiten können jeweils zwischen 150 mm und 1500 mm liegen. H ist die Höhe des Vertikalelements und liegt üblicherweise zwischen 150 mm und 1500 mm. D1, D2, D3 und D4 bezeichnet die Dicken der Mittel-, Rand- und Ausgleichselemente. Die Dicken können jeweils zwischen 100 mm und 400 mm liegen, wobei das Mittelelement häufig dünner ausgeführt ist. D bezeichnet die Dicke des Vertikalelements und liegt üblicherweise zwischen 80 mm und 400 mm.

Für die Verlegeschemen der Fig. 7 und Fig. 8 ist zu beachten, dass diese je nach Anwendungsfall auch nur teilweise ausgeführt werden können, also beispielsweise auf Vertikalelemente, Ausgleichselemente und/oder Randelemente verzichtet werden kann.

Zusammenfassend lässt sich sagen, dass die Erfindung ein Verfahren zur Herstellung eines Schallabsorbers betrifft, dass zumindest die folgenden Schritte umfasst:
i. des Einbringens eines Porenbetons 1 in eine Form 2, wobei
ii. der Porenbeton 1 unter gleichzeitigem Rütteln für 5 bis 12 Sekunden, bevorzugt bei 150 bis 200 Hz, bis zu einem Verdichtungsfaktor von 1,05 bis 1,45, bevorzugt bis zu einem Verdichtungsfaktor von 1,2-1,33 verpresst wird, wobei das Verpressen gleichmäßig über die gesamte Oberfläche des Porenbetons (1) erfolgt, und
iii. der Schallabsorber ausgehärtet wird.

In einem besonders vorteilhaften Verfahren wird, nachdem der Porenbeton 1 unter gleichzeitigem Rütteln verpresst wurde (Pkt. ii), im noch nassen Zustand auf den Porenbeton 1, bevorzugt innerhalb von 30 min nach Verpressen des Porenbetons 1, eine Schicht Trägerbeton 5 aufgebracht und der gesamte Schallabsorber gerüttelt. Dieses besonders bevorzugte Verfahren umfasst damit die Schritte:
i. des Einbringens eines Porenbetons 1 in eine Form 2, wobei
ii. der Porenbeton 1 unter gleichzeitigem Rütteln verpresst wird,
iii. im noch nassen Zustand, bevorzugt innerhalb von 30min nach Schritt ii) auf den Porenbeton 1 eine Schicht Trägerbeton 5 aufgebracht wird,
iv. der gesamte Schallabsorber gerüttelt wird,
v. der Schallabsorber ausgehärtet wird.

In einer weiteren besonders vorteilhaften Ausgestaltung des erfindungsgemäßen Verfahrens weist die Form 2 konische Strukturen auf, die sich in das Innere der Form 2 erstrecken. Im Zuge der Herstellung nehmen diese konischen Strukturen zumindest einen Teil des Raums ein, der ohne die konischen Strukturen vom Porenbeton 1 aufgefüllt würde. In einer weiteren bevorzugten Ausgestaltung des erfindungsgemäßen Verfahrens wird in die Tragbetonschicht 5 eine Bewehrung 4 eingebracht. Dieses besonders bevorzugte Verfahren umfasst damit die Schritte:
i. des Einbringens eines Porenbetons 1 in eine Form 2, wobei
ii. der Porenbeton 1 unter gleichzeitigem Rütteln verpresst wird,
iii. in die Tragbetonschicht 5 eine Bewehrung 4 eingebracht wird,
iv. im noch nassen Zustand auf den Porenbeton 1 eine Schicht Trägerbeton 5 aufgebracht wird der die Bewehrung 4 einschließt,
v. der gesamte Schallabsorber gerüttelt wird,
vi. der Schallabsorber ausgehärtet wird.

Weiters umfasst die Erfindung Schallabsorber die nach einem der erfindungsgemäßen Verfahren hergestellt wurden, wobei der Schallabsorber bevorzugt eine Tragbetonschicht 5 aufweist und die Oberfläche des Schallabsorbers bevorzugt eine konische Lochstruktur, zumindest in der Porenbetonschicht 1, und/oder eine Bewehrung 4 aufweist. Drüber hinaus umfasst die Erfindung ein Verlegeschema, bevorzugt nach den Fig. 7 und 8, das eine besonders gute Schallabsorbtion erreicht.

Ein erfindungsgemäßer Schallabsorber umfasst zumindest eine Porenbetonschicht 1 aus faserunterstützten haufwerksporigem Beton, wobei die Porenbetonschicht 1 ein mittleres Porenvolumen von 22% bis 40%, bevorzugt von 28% bis 30% besonders bevorzugt ein von 28,6% bis 29,5%, gemessen mittels Flüssigkeitsverdrängung nach dem Archimedischen Prinzip, aufweist. Weiters soll die Porenbetonschicht 1 eine Packungsdichte von 0,5 - 0,8 und besonders bevorzugt von 0,64-0,74 gemäß DIN 4213, sowie bevorzugt eine Druckfestigkeit von mindestens 8 N/mm² und durchschnittlich zumindest 14 N/mm², besonders bevorzugt von mindestens 11 N/mm² und durchschnittlich zumindest 15 N/mm², gemessen nach EN 12390, aufweisen.

Der zur Herstellung des Schallabsorbers verwendete haufwerksporige Beton soll einen W/B-Wert von 0,23-0,31, bevorzugt 0,25-0,29, besonders bevorzugt 0,28 aufweisen.

Bevorzugt umfasst der erfindungsgemäße Schallabsorber weiters eine Trägerbetonschicht 5, wobei die Trägerbetonschicht 5 bevorzugt eine Bewehrung 4 aufweist. Die Druckfestigkeit der Trägerbetonschicht 5 beträgt bevorzugt zumindest 30 N/mm², besonders bevorzugt zumindest 40 N/mm², gemessen nach EN 12390. Weiters weist die Tragbetonschicht 5 bevorzugt eine um etwa 30% höhere Dichte als die Porenbetonschicht 1 auf.

Die Porenbetonschicht 1 kann eine von Körnung 0/4mm und 2/4mm und konische Löcher aufweisen, die zumindest durch ein Drittel der Porenbetonschicht 1 reichen.

Die Dichte der Porenbetonschicht 1 beträgt bevorzugt etwa 1850 kg/m³ und/oder die Dichte der Trägerbetonschicht 5 bevorzugt etwa 2400 kg/m³. Bevorzugt beträgt das Verhältnis der Dicke der Tragbetonschicht 5 zur Porenbetonschicht 1 zumindest 1:1.

## Patentansprüche

1. Schallabsorber, umfassend zumindest eine Porenbetonschicht (1) aus faserunterstützten haufwerksporigem Beton, **dadurch gekennzeichnet, dass** die Porenbetonschicht (1) ein mittleres Porenvolumen von 22% bis 40%, gemessen mittels Flüssigkeitsverdrängung nach dem Archimedischen Prinzip, aufweist.

2. Schallabsorber gemäß Anspruch 1, **dadurch gekennzeichnet, dass** die Porenbetonschicht (1) ein mittleres Porenvolumen von 28% bis 30%, besonders bevorzugt ein mittleres Porenvolumen von 28,6% bis 29,5% aufweist.

3. Schallabsorber nach Anspruch 1 oder 2, **dadurch gekennzeichnet, dass** der zur Herstellung des Schallabsorbers verwendete haufwerksporige Beton einen W/B-Wert von 0,23-0,31 aufweist, bevorzugt 0,25-0,29, besonders bevorzugt 0,28.

4. Schallabsorber nach Anspruch 1 bis 3, **dadurch gekennzeichnet, dass** die Porenbetonschicht (1) eine Packungsdichte von 0,5 - 0,8 und besonders bevorzugt von 0,64-0,74 gemäß DIN 4213 aufweist.

5. Schallabsorber nach Anspruch 1 bis 3, **dadurch gekennzeichnet, dass** die Porenbetonschicht (1) eine Druckfestigkeit von mindestens 8 N/mm² und durchschnittlich zumindest 14 N/mm², bevorzugt von mindestens 11 N/mm² und durchschnittlich zumindest 15 N/mm², bestimmt nach EN 12390, aufweist.

6. Schallabsorber nach einem der Ansprüche 1 bis 4, **dadurch gekennzeichnet, dass** der Schallabsorber weiters eine Trägerbetonschicht (5) umfasst, wobei die Trägerbetonschicht (5) bevorzugt eine Bewehrung (4) aufweist.

7. Schallabsorber gemäß Anspruch 5, **dadurch gekennzeichnet, dass** die Trägerbetonschicht (5) eine Druckfestigkeit von zumindest 30 N/mm², bevorzugt von zumindest 40 N/mm², bestimmt nach EN 12390, aufweist.

8. Schallabsorber nach einem der Ansprüche 1 bis 6, **dadurch gekennzeichnet, dass** die Porenbetonschicht (1) eine von Körnung 0/4mm und 2/4mm aufweist.

9. Schallabsorber nach einem der Ansprüche 1 bis 7, **dadurch gekennzeichnet, dass** der Schallabsorber konische Löcher aufweist, die zumindest durch ein Drittel der Porenbetonschicht (1) reichen.

10. Schallabsorber nach einem der Ansprüche 1 bis 8, **dadurch gekennzeichnet, dass** die Tragbetonschicht (5) eine um etwa 30% höhere Dichte als die Porenbetonschicht (1) aufweist.

11. Schallabsorber nach einem der Ansprüche 1 bis 9, **dadurch gekennzeichnet, dass** die Porenbetonschicht (1) eine Dichte von etwa 1850 kg/m³ aufweist und/oder die Trägerbetonschicht (5) eine Dichte von etwa 2400 kg/m³ aufweist.

12. Verfahren zur Herstellung eines Schallabsorbers gemäß einem der Ansprüche 1 bis 11, umfassend die Schritte
i. des Einbringens eines haufwerksporigen Porenbetons (1) in eine Form (2), **dadurch gekennzeichnet, dass**
ii. der Porenbeton (1) unter gleichzeitigem Rütteln, für 5 bis 12 Sekunden, bevorzugt bei 150 bis 200 Hz, bis zu einem Verdichtungsfaktor von 1,05 bis 1,45, bevorzugt bis zu einem Verdichtungsfaktor von 1,2-1,33 verpresst wird, wobei das Verpressen gleichmäßig über die gesamte Oberfläche des Porenbetons (1) erfolgt, und
iii. der Schallabsorber ausgehärtet wird.

13. Verfahren nach Anspruch 12, **dadurch gekennzeichnet, dass** das Verpressen in Schritt ii) mit einem Druck von zumindest 1500 kg/m², bevorzugt mit einem Druck von zumindest 1700 kg/m² erfolgt.

14. Verfahren nach einem der Ansprüche 12 bis 13, **dadurch gekennzeichnet, dass** zum Verpressen des Porenbetons (1) in Schritt ii. des Anspruchs 1 eine hydraulische Presse verwendet wird.

15. Verfahren nach einem der Ansprüche 12 bis 14, **dadurch gekennzeichnet, dass** der Schallabsorber in einer Reifekammer ausgehärtet wird.
